Europäisches Patentamt

(19) European Patent Office

Office européen des brevets

(11) Publication number: **0 027 805**
**B1**

(12) **EUROPEAN PATENT SPECIFICATION**

(45) Date of publication of patent specification: **15.06.83**

(51) Int. Cl.³: **B 01 D 53/14**

(21) Application number: **80900743.8**

(22) Date of filing: **10.03.80**

(86) International application number:
**PCT/US80/00254**

(87) International publication number:
**WO 80/02387 13.11.80 Gazette 80/26**

(54) **IMPROVED PROCESS FOR REMOVAL AND RECOVERY OF VINYL CHLORIDE MONOMER FROM VENT GAS STREAM IN POLYVINYL CHLORIDE PLANT.**

(30) Priority: **02.05.79 US 35140**

(43) Date of publication of application:
**06.05.81 Bulletin 81/18**

(45) Publication of the grant of the patent:
**15.06.83 Bulletin 83/24**

(84) Designated Contracting States:
**DE FR GB NL SE**

(56) References cited:
**DE - A - 2 446 815**
**FR - A - 1 505 735**
**FR - A - 2 299 298**
**GB - A - 770 507**
**GB - A - 787 883**
**US - A - 3 109 837**
**US - A - 3 255 171**
**US - A - 3 463 603**
**US - A - 3 642 736**
**US - A - 4 061 849**
**US - A - 4 147 848**
**N, EPA-450/2-75-009**

(73) Proprietor: **The B.F. GOODRICH Company**
**Dept. 0015 WHB-6 500 South Main Street**
**Akron, Ohio 44318 (US)**

(72) Inventor: **KLEIN, John Edward**
**8684 Bradford Lane**
**Brecksville, OH 44141 (US)**

(74) Representative: **von Kreisler, Alek, Dipl.-Chem.**
**et al,**
**Deichmannhaus am Hauptbahnhof**
**D-5000 Köln 1 (DE)**

Courier Press, Leamington Spa, England.

# Improved process for removal and recovery of vinyl chloride monomer from vent gas stream in polyvinyl chloride plant

## Background of the invention—prior art

Adverse human health effects from exposure to vapors of vinyl chloride monomer (VCM) have made it necessary that essentially no VCM be released from equipment used in VCM and polyvinyl chloride (PVC) production plants to the workplace environment or the outside atmosphere. Regulations were promulgated in 1974 by the United States Occupational Safety and Health Administration severely limiting the amount of VCM to which workers can be exposed in the workplace. These regulations have been met by the industry through the development and application of improved technological means for confining VCM inside production equipment and removing it from PVC as it leaves the production plant.

At about the same time the United States Environmental Protection Agency (EPA) began development of a regulation restricting the release of VCM from VCM and PVC production plants to the outside environment. By late 1975 this regulatory effort had resulted in public distribution of a document, EPA-450/2-75-009 October, 1975, entitled "Standard Support and Environmental Impact Statement: Emission Standard for Vinyl Chloride", in which was described, in respect of PVC plants, the processes and equipment used in production of PVC from VCM by suspension polymerization, dispersion polymerization, and bulk polymerization, the sources of VCM emissions from the processes and equipment in each case, and the means which had then been used or which were proposed to be used for limiting VCM emissions from the various sources.

In October, 1976, EPA promulgated regulations requiring that within two years, or by October, 1978, all United States PVC production plants limit VCM emissions such that, among other things, gas streams vented from emission sources in the flow of materials through the plant (except those "downstream" of the operation in which VCM is stripped from the PVC polymer after its formation in the polymerization reactors) contain no more than 10 parts per million (ppm) of VCM by volume. The 1975 EPA document referred to indicates that the then state-of-the-art was such that technology to achieve this result could be developed within the allotted time through the use of "add-on" type control systems, such as sorbers (carbon adsorbers and solvent absorbers) refrigeration systems, or incinerators, or a combination thereof.

The prior use of solvent absorbers and the particular solvents which had then been used are described in general terms in the EPA document. The EPA document also contains a description of a process in which vent gases from a low temperature (−43°C or −46°C) VCM condensing system are fed into the bottom of an adsorption column and passed upward countercurrent to liquid ethylene dichloride (EDC) as solvent. The unabsorbed gases are cooled in a refrigerated vent condenser to remove solvent before being vented from the system. The EDC solvent with dissolved VCM is sent to a distillation column where VCM is stripped from the solvent and returned to the low temperature condensing system while the stripped solvent is cooled and returned to the absorption column for reuse. This system as operated prior to 1975 removed VCM from the vent gas to a level of 15 ppm but EPA in the document expresses the opinion that a solvent absorption unit of modern engineering design could meet the 1978 requirement of below 10 ppm.

## Summary of the invention

This invention provides an improved solvent absorption/stripping process for removal and recovery of VCM from a gas stream in a PVC production plant where it is present with air prior to venting of the gas stream to the atmosphere. The process uses as the solvent for the absorption a branched chain saturated aliphatic hydrocarbon containing 8 carbon atoms and composed predominately of 2,2,4-trimethyl pentane commonly called isooctane. Use of this solvent enables the VCM content of the vent gas stream to be reduced to well below 5 ppm by volume and even to as low as less than 1 ppm by volume, which is a substantially greater reduction than is required to meet the U.S. National Emission Standard for VCM. The process using this solvent does not require the use of expensive refrigeration equipment to condense VCM from the gases prior to absorption, or to cool the gases after absorption to remove solvent prior to their venting. This solvent also is particularly adaptable to being stripped of the absorbed VCM at temperature and pressures compatible with use as the heat source for the stripping operation of ordinary plant steam.

## Description of the invention

The invention will be described through a detailed explanation of the vent gas streams in PVC plants used as the feed stream for the solvent absorption/stripping operation and from which the VCM is removed and recovered; the system used in the solvent absorption/stripping operation; the nature and characteristics of the particular solvent used and the conditions under which the solvent absorption/stripping system is operated.

Feed stream—vent gas streams in PVC plants: In the production of PVC by suspension polymerization or dispersion polymerization, VCM is polymerized in an aqueous medium in a closed batch reactor to form an aqueous slurry or latex which is discharged from the reactor to a second vessel called a "stripper" where unreacted VCM is removed. The cycle starts with a clean empty reactor which is full of air. The amount of water required for the polymerization reaction is added to the reactor and a steam jet or vacuum pump is used to remove some of the air, the amount of air left depending on the absolute pressure after evacuation. The VCM in liquid form and other chemicals required for the polymerization are added to the closed reactor and the polymerization reaction occurs, at the completion of which the batch is discharged to the stripper. The VCM gas left in the reactor after the polymerization is removed from the batch by vacuum and transferred to a monomer recovery system. The VCM gas removed by the stripping operation is also recovered in a monomer recovery system. The gas stream going to the monomer recovery system contains the air which was initially left in the reactor plus air present in the stripper when the batch is transferred. Further, if the reactor is opened for cleaning, which is periodically required, the air left in the clean reactor in the next cycle also ends up in the monomer recovery system. All this air builds up in the monomer recovery system and not being condensable must be vented from the system to prevent pressure buildup.

The monomer recovery system consists of compressors and refrigerated condensers to remove some of the VCM from the air stream before it is vented. The ratio of air to VCM in the stream is determined by temperature and pressure at the exit of the condenser. The effectiveness of the system to reduce the VCM content of the vent gas increases with decreasing temperature and increasing pressure. Reduction of VCM content is limited by high costs associated with cooling and condensing the gases and also by freezing if water is present in the gas, which is, of course, the case since water is the medium for the polymerization reaction in the suspension and dispersion polymerization process. Accordingly usual design pressure and temperature of the monomer recovery system are not greater than 4 atmospheres or lower than 7°C. Under such conditions in the monomer recovery system, the gases leaving the system contain a ratio of VCM to inerts (the term "inerts" is used to include the components of air, i.e. oxygen, nitrogen and other gases, as well as water vapor) in the range of about 1:1 to 4:1. The stream containing the gases in this ratio is the vent gas stream to which the solvent absorption/stripping process of this invention is normally applied.

It is possible, however, under certain specific situations in PVC production plants and with specific VCM recovery systems that the vent gas stream be less rich in VCM. For example, if water is removed upstream of the vent condenser (as by absorption in methanol, or with certain streams from plants producing PVC by the bulk process, the conditions in the monomer recovery system are not limited by the possibility of water freezing and the vent gas stream of the condenser can contain a lower ratio of VCM to inerts than 1:1. In no event, however, is it possible to reduce the VCM content of the gas stream by refrigeration alone to as low as 10 ppm.

It is noted that gas streams off equipment used in the dispersion and suspension polymerization processes, when both are practiced at the same PVC plant, or from various other VCM sources such as VCM handling operations, containing varying ratios of VCM to inerts, may be combined and the combined stream will serve as the feed stream for the solvent absorption/stripping process of this invention.

Solvent absorption/stripping system— The system used in the solvent stripping process of this invention is outlined in the accompanying drawing in which the sole figure represents a simplified flow diagram.

A vent gas stream from PVC production operations as described above containing the VCM and the components of air is fed through line 10 to the bottom section of a packed absorber column, 11, while a stream of solvent is fed through line 12 to the top of column 11. The solvent passes downward in the column countercurrent to the vent gas stream flowing upward in the column, where the solvent absorbs the VCM in the gas stream and the air is vented overhead through line 13. The solvent containing absorbed VCM flows from the bottom of the column through line 14 to a heat exchanger where its temperature is elevated by the heat exchange medium and then flows through line 16 to a stripping column having a packed stripping section 17a and a packed rectification section 17b. The VCM-rich solvent from line 16 is fed to the top of section 17a where it is further heated and vaporized as it flows down the column by means of heat supplied through a reboiler 18 heated with steam. The heat strips the absorbed VCM from the solvent in section 17a converting it to VCM vapor which passes through rectification section 17b and overhead through line 19 where it is condensed to liquid in an overhead condenser and a portion of the liquid VCM returned for reflux through line 20 and the remainder goes to storage and reuse.

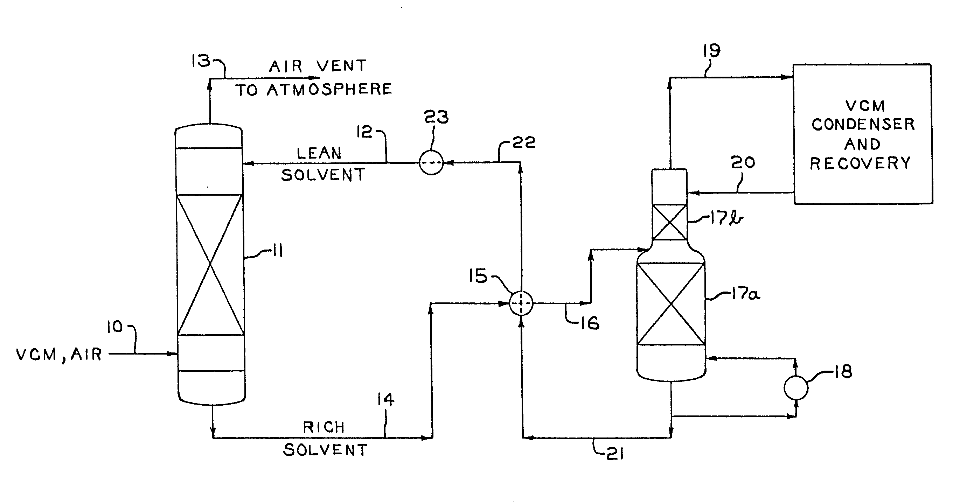

The lean solvent from the bottom of stripper column section 17a is fed through line 21 back to heat exchanger 15 where it is cooled and flows through line 22 to a chiller 23 for further cooling before reentering the absorber through line 12 as previously described, so that the path of the solvent through the absorber/stripper forms a complete "figure 8". Obviously pumps are used to circulate the solvent through the system but for simplification these are not shown on the drawing. Solvent for start up and for make-up if required, can be introduced into line 21, 22 or 12 through an additional line also not shown. Other modifications and variations in the system arrangement to meet particular conditions but without affecting the above described "figure 8" configuration will be apparent to engineers skilled in the art.

Solvent used in absorption/stripping— In accordance with this invention and as an essential feature thereof, the solvent which is used in operation of the system described is preferably 2,2,4-trimethyl pentane, commonly called isooctane, which has a boiling point at atmospheric pressure (1 000 bar) of 98—99°C. Another solvent which works equally as well is supplied by Phillips Petroleum Co. as "Soltrol 10"* which has a boiling range of 95—103°C at atmospheric pressure, and which consists of a mixture of C-8 branched chain saturated aliphatic hydrocarbons with the predominant constituent being 2,2,4-trimethyl pentane. Either of these solvents is used in the absorption/stripping process described not because of any greater absorbing affinity for VCM than many other solvents but rather because of the excellent results secured by its use for the purpose intended in typical PVC plant operations, as will be indicated in the examples below.

Conditions for operation of absorption/stripping system— The absorption/stripping system described, as designed for using the solvent described, can be operated over a wide range of temperatures and pressures and can handle feed streams with a wide range of VCM concentration flowing at rates well in excess of 112,5 kg per hour, up to as high as 405 or even 810 kg per hour. It is estimated that in production plants of large capacity (designed to produce 150 mm pounds per year, or more, of PVC by the suspension process) where air vent rates normally exceed 112,5 kg per hour, the absorption/stripping system of this invention may be easily operated in such a manner as to recover enough VCM monomer to pay for the cost of installing the absorption/stripping system in a period of about 1 year.

The preferred operating conditions are those which do not require extensive refrigeration at any stage. Thus it is preferred that the system temperature be no lower than about 4—10°C, particularly if water is present in the vent gas, although the system can be designed to operate at lower temperatures. The highest temperature which can be used in the system is dependent on the steam pressure which is the source of heat to generate the reboil vapor in the stripper. Steam is typically available in PVC production plants at a pressure of 11,5 bar at a temperature of 186°C and the temperature in the stripping column should not be designed to operate above that temperature.

The system can be designed at any convenient pressure. It is preferred to design the

* Registered Trademark absorber to operate at a pressure below, but not necessarily more than about 1/6 to 1/3 below, the pressure at which the feed stream can be delivered to the absorber. It is also preferred to design the stripper at a high enough operating pressure to be able to return the recovered VCM for reuse.

In operation of the absorber with a feed stream containing more VCM than air and with essentially complete removal of VCM from the feed stream, it is apparent that there is a stage at which the range of VCM concentration in air is from 3 to 33% by volume, which is the explosive range. However, the volume of gas in the explosive range is relatively small and any combustion hazard theoretically present is eliminated by the "heat sink" provided by the solvent in the absorber.

Examples
Example I
In this Example vent streams from VCM recovery sections of a plant producing PVC by both the suspension polymerization and dispersion polymerization processes are combined in a feed tank and the combined stream fed to an absorber/stripper system arranged as indicated in the drawing. The feed through line 10 is at a pressure of 4,85 bar and a temperature of 4°C and consists of VCM flowing at the rate of 279 kg/hour mixed with air saturated with water vapor flowing at a rate of 126 kg/hour for a total feed stream of 405 kg/hour. The absorber column 11 is 45,72 cm in diameter and 6,15 m high. The packing in the column is 1,27 cm "intalox"* saddles. Commercial isooctane (2,2,4-trimethyl pentane) flows into the top of column 11 at a temperature of 10°C, a pressure of 3,45 bar, and a rate of 2690,1 kg/hour. The isooctane containing absorbed VCM leaving the absorber column through line 14 is at a temperature of 24°C and a pressure of 3,59 bar flowing at a rate of 2976,75 kg/hour, including VCM at a rate of 279 kg/hour, as in the feed stream, air at a rate of 10,35 kg/hour and isooctane at a rate of 2687,4 kg/hour.

The vent stream leaving the top of the column through line 13 at a temperature of 11°C and 3,45 bar is essentially free of VCM, containing less than 1 ppm VCM by volume, and consists of 115,65 kg/hour of inerts and only 3,15 kg/hour of isooctane vapors from the solvent.

VCM rich isooctane in line 14 described above is pumped by a pump (not shown in the drawing), increasing its pressure to 5,27 bar, to heat exchanger 15 to produce in line 16 a stream of liquid/vapor at a temperature of 113°C and a pressure of 3,87 bar. This stream is fed to a stripping column 17a, 17b which is a total of 15,24 m (50 feet) high with stripping section 17a 76,2 cm (30 inches) in diameter and rectification section 17b 50,8 cm (20 inches) in diameter. VCM vapor leaving the rectification section 17b is at a temperature of 23°C and a pressure of 3,8 bar. Liquid VCM is returned to the rectification section 17b to provide a reflux ratio in the range of 1:1 to 3:1. Liquid VCM is recovered from the system at the rate of about 270 kg/hour. The condensed VCM contains water present in the vent gas which is decanted and separated at intervals. Air through the system is recycled with uncondensed VCM. The solvent in stripping section 17a is heated in the reboiler 18 by steam at 11,5 bar and 180°C. The lean solvent from the stripping column in line 21 has a temperature of 154°C and a pressure of 3,94 bar as it goes to heat exchanger 15; in line 22, after leaving the heat exchanger, it is cooled to 52°C and is at a pressure of 2,75 bar and in line 12 after leaving chiller 23 it is at a temperature of 10°C and a pressure of 3,45 bar and flows at essentially the rate above described, there being only 3,15 kg/hour of isooctane lost from the system with the vent gas stream. This amount can of course be replenished with fresh solvent makeup as desired.

In operation of the system as described, flow rates may vary up to 1/2 to 2 times those specifically set forth, but this does not affect the efficient operation described.

This example shows that with the use of the solvent described VCM monomer is reduced in the vent stream going to the atmosphere to below 1 ppm and that the VCM is recovered for reuse in essentially quantitative manner.

Example II

In this example the feed vent gas stream from another PVC plant contains approximately 86% VCM and 14% inerts. The solvent used in the absorption/stripping system is again commercial isooctane. The vent gas off the absorber in the absorption/stripping operation contains less than 5 ppm when the stripping column is operated at either the high pressure of 3,8 bar or the low pressure of 1,38 bar. In both cases the VCM is recovered for reuse in substantially quantitative amounts.

Example III

In this example representing a special plant situation, the vent gas feed to the absorber is free of water and is introduced to the absorber at a temperature of −32°C and a pressure of 1,14 bar while commercial isooctane is introduced into the absorber at 10°C and a pressure of 0,007 bar. Here again the vent gas contains less than 5 ppm VCM and the VCM absorbed in the isooctane is recovered in substantially quantitative amounts.

Advantages of the invention

The examples given describe highly successful operation of the process of this invention under different conditions and in different PVC production plants. These operations began less than 1 year before the date of this application and have continued until its date. During that time the VCM in the vent gas released to the atmosphere has never been above 5 ppm. The use of 2,2,4-trimethyl pentane (isooctane) as the solvent used in the process has enabled the stripping column to operate efficiently with 11,5 bar, 186°C reboiler steam. The amount of solvent vapor passing out of the system with the air vent after treatment has presented no problems from the environmental standpoint, but if it were desired to prevent this hydrocarbon in the amounts indicated from entering the atmosphere, this could be readily accomplished by burning it as fuel.

In contrast the use of other solvents in absorption/stripping systems, or the use of other means to reduce the VCM content of vent gas streams as by incineration or use of carbon adsorbers, is not as satisfactory as is the practice of this invention. If hydrocarbon solvents boiling higher than isooctane, such as kerosene or heavy petroleum oils or the like, or even hydrocarbons which boil only slightly higher than isooctane such as normal octane or meta-xylene, are used for absorption/stripping as described the stripper cannot be supplied with sufficient heat by the use of a reboiler operating on 11,5 bar—186°C steam to handle the potential load. On the other hand, if a lower boiling solvent is used a greater proportion of the solvent will be lost from the system with the treated vent gas and this is quite disadvantageous in case the solvent is an aromatic hydrocarbon, benzene for instance, because of the known toxicity of benzene, and in the case of a chlorinated solvent, EDC for instance, not only because of its possible toxicity but also because incineration produces corrosive hydrogen chloride.

The use of other "add on" type systems for reducing the VCM content of the vent gas stream such as incineration or adsorption on carbon, is also disadvantageous as compared with the solvent absorption/stripping system of this invention. Incineration of the vent gas stream precludes recovery of VCM and produces such a quantity of corrosive hydrogen chloride that it must be scrubbed with alkali to convert it to salt. Incinerators also have other disadvantages and their use in commercial plants is justified only if the vent stream is small and constant, or for use as the emergency backup for absorption or adsorption devices. The use of carbon adsorbers is disadvantageous because of their high capital cost and also because of the greater risk of explosion of a mixture of VCM in air as it passes through the explosive range.

In summary, it is believed that the absorption/stripping process described herein, using the solvent described herein, is the most advantageous method presently known for removing and recovery of VCM from vent gas in PVC plants. Because of its commercial success and its importance to PVC processes, the owner of this application is prepared to grant licenses on reasonable terms for use of the complete engineering and operational technology required including rights under the invention of this application.

## Claims

1. A process for removal and recovery of vinyl chloride monomer from a gas stream containing air admixed with vinyl chloride monomer, which stream originates in a polyvinyl chloride production plant and is normally vented therefrom to the atmosphere, which process comprises the steps of passing the gas stream before its venting to the atmosphere countercurrent to a stream of absorbent solvent to absorb the vinyl chloride monomer in the solvent, stripping the solvent to remove the absorbed vinyl chloride monomer, recovering the stripped vinyl chloride monomer and returning the solvent after stripping to the absorption step, the improvement which consists of using as the solvent a branched chain saturated aliphatic hydrocarbon of 8 carbon atoms and composed predominately of 2,2,4-trimethyl pentane.

2. The process of Claim 1 further characterized in that the starting gas stream contains a ratio of vinyl chloride monomer to other gases in the range of 1:1 to 4:1.

3. The process of the preceding claims further characterized in that the solvent is at a temperature greater than 4°C.

## Patentansprüche

1. Verfahren zur Abtrennung und Rückgewinnung von monomerem Vinychlorid aus einem Luft im Gemisch mit monomerem Vinylchlorid enthaltenden Gasstrom, der einer Produktionsanlage für Polyvinylchlorid entstammt und normalerweise aus dieser in die Atmosphäre abgelassen wird, worin schrittweise der Gasstrom vor dem Ablassen in die Atmosphäre im Gegenstrom zu einem absorbierenden Lösungsmittel zwecks Absorption des monomeren Vinylchlorids in dem Lösungsmittel geführt wird, das absorbierte monomere Vinylchlorid aus dem Lösungsmittel desorbiert wird, das desorbierte monomere Vinylchlorid zurückgewonnen wird und das Lösungsmittel nach dem Desorbieren in die Absorptions-Stufe zurückgeführt wird, dadurch gekennzeichnet, daß als Lösungsmittel ein kettenverzweigter gesättigter aliphatischer Kohlenwasserstoff mit 8 Kohlenstoff-Atomen, der überweigend aus 2,2,4-Trimethylpentan besteht, eingesetzt wird.

2. Verfahren nach Anspruch 1, dadurch gekennzeichnet, daß der Ausgangs-Gasstrom das monomere Vinylchlorid in einem Mengenverhältnis im Bereich von 1:1 bis 4:1 zu den anderen Gasen enthält.

3. Verfahren nach Anspruch 1 bis 2, dadurch gekennzeichnet, daß das Lösungsmittel sich auf einer Temperatur von mehr als 4°C befindet.

## Revendications

1. Procédé pour prélever et récupérer du chlorure de vinyle monomère à partir d'un courant gazeux contenant de l'air en mélange avec du chlorure de vinyle monomère, courant qui s'est formé dans une installation de production de chlorure de polyvinyle d'où il est normalement libéré dans l'atmosphère, ce procédé comprenant les étapes consistant à faire passer le courant gazeux, avant sa libération dans l'atmosphère, à contre-courant d'un courant de solvant absorbant pour absorber dans le solvant le chlorure de vinyle monomère à extraire le solvant pour enlever le chlorure de vinyle monomère absorbé, à récupérer le chlorure de vinyle monomère extrait et à renvoyer le solvant, après l'extraction, à l'étape d'absorption, le perfectionnement consistant à utiliser comme solvant un hydrocarbure aliphatique saturé ramifié, formé de 8 atomes de carbone et composé principalement de 2,2,4-triméthyl-pentane.

2. Procédé selon la revendication 1, caractérisé en ce que dans le courant de gaz d'évent le rapport du chlorure de vinyle monomère aux autres gaz est compris entre 1:1 et 4:1.

3. Procédé selon les revendications précédentes, caractérisé en ce que que le solvant est à une température supérieure à 4°C.